# FASCICULE DE BREVET EUROPEEN

(11) **EP 0 332 510 B1**
(45) Date de publication et mention de la délivrance du brevet: **08.09.1993**
(21) Numéro de dépôt: 89400585.9
(22) Date de dépôt: 02.03.1989
(51) Int. Cl.: B29C 55/06

(54) **Dispositif d'étirage d'un film de matière plastique**
Vorrichtung zum Strecken einer Kunststoff-Folie
Apparatus for stretching a plastic film

(30) Priorité: 04.03.1988 FR 8802797
(43) Date de publication de la demande: 13.09.1989
(73) Titulaire: SIGNODE FRANCE, F-75010 Paris (FR)
(72) Inventeur: Bregier, Michel, F-75019 Paris (FR)
(74) Mandataire: Robert, Jean-Pierre

(56) Documents cités:
- EP-A- 0 179 709
- DE-A- 1 504 058
- FR-A- 2 281 275
- LU-A- 46 486
- US-A- 3 243 845

## Description

La présente invention concerne un dispositif d'étirage d'un film de matière plastique délivré à partir d'une bobine, comme mentionnée dans le préambule de la revendication 1.

Il existe actuellement sur le marché des films en matière plastique, susceptibles d'être étirés dans de grandes proportions, au détriment de leur épaisseur et, dans une moindre mesure de leur largeur. L'une des applications de ces films réside dans l'emballage et l'étirage a pour principal but d'économiser de la matière. Cet étirage bien que s'opérant largement dans le domaine des déformations plastiques, préserve au film une certaine élasticité résiduelle qui est utilisée pour l'assujettissement de l'emballage sur le produit.

L'étirage d'un film dans le sens de sa longueur et en continu consiste, dans tous les appareils connus, à utiliser au moins deux rouleaux sur chacun desquels le film s'appuie -avec une surface de contact suffisante pour que la friction entre le film et le rouleau interdise tout glissement- et à faire tourner ces rouleaux de manière que leur vitesse périphérique soit différente. Ainsi, la vitesse du film à la sortie de ces deux rouleaux est plus grande que celle à l'entrée, ce qui engendre dans la portion de film comprise entre les rouleaux cylindriques une force longitudinale génératrice de l'étirage du film. On comprend que le rapport de ces deux vitesses périphériques est égal au rapport d'étirage et on peut ainsi obtenir jusqu'à 300 % d'allongement du film.

On connaît de nombreux modes de réalisation mettant en oeuvre ces moyens fondamentaux. L'un des plus simples consiste à prévoir un entraînement du rouleau aval par un moteur et un frein du rouleau amont pour le ralentir de la quantité correspondant à l'allongement désiré. Un second mode de réalisation consiste à accoupler les deux rouleaux mécaniquement et à étirer un film qui passe entre eux. On peut également assister le passage du film en motorisant l'un des rouleaux et en asservissant le fonctionnement du moteur à un certain nombre de paramètres.

Lorsque l'on cherche à obtenir la totalité de l'étirage entre deux rouleaux, on se heurte assez rapidement au fait que la contrainte appliquée au film est très brutale et est la cause de nombreuses ruptures, notamment lorsque la nature, les dimensions du film ou l'atmosphère ambiante sont sujettes à des variations. Pour obtenir un fonctionnement satisfaisant, on est donc obligé de réduire le taux d'allongement, diminuant par là-même les risques de rupture donc d'arrêt du dispositif.

Une solution à ce problème réside dans la multiplication des étapes d'étirage, le film passant sur une pluralité de rouleaux successifs dont les vitesses périphériques vont croissant dans le sens de défilement du film comme illustré pour le document LU-A-46 486. L'un des inconvénients de cette succession réside dans l'encombrement du dispositif. Un second inconvénient tient aux faits que dans cet appareil les taux d'allongement sont figés à chaque étape et qu'une variation dans les caractéristiques d'un film, dans l'atmosphère ambiante, ou un changement de la nature du film ne peuvent être pris en compte qu'avec un démontage des mécanismes d'accouplement ou au moyen de variateurs de vitesse dans la chaîne de transmission entre rouleaux qui sont des appareils fragiles et coûteux. On mentionnera enfin l'existence de variantes plus ou moins complexes du principe de base dans lesquelles on procède à la variation du taux d'allongement en remplaçant l'un des rouleaux du dispositif par un autre rouleau ayant une vitesse périphérique différente, ou en modifiant le diamètre de l'un des rouleaux pour agir, à vitesse de rotation constante, sur la vitesse périphérique.

Aucun des dispositifs connus ne permet de résoudre le problème que posent les variations de toute nature des conditions de l'étirage au cours du processus dont l'une importante, est celle de l'épaisseur du film au sein d'une même bobine ou entre bobines consécutives, dûe au mode de fabrication lui-même du film étirable. Un autre facteur important est la température de fonctionnement de l'appareil.

On a en effet constaté une fréquence de rupture de film beaucoup plus importante au démarrage du processus d'étirage, qu'en fonctionnement normal, de même qu'à une température ambiante plus basse. Il faut mentionner à ce propos que les opérations d'étirage associées à l'emballage sont souvent réalisées dans des hangars d'expédition de produits dans lesquels la température ambiante varie notamment avec les saisons.

La présente invention entend proposer une solution à ce problème au moyen d'un dispositif simple et robuste permettant d'obtenir une régulation automatique du processus d'étirage en fonction des variations des conditions dans lequel il s'effectue. Cette régulation est obtenue sans l'aide de moyens d'asservissement donc en l'absence de tout moyen de détection de paramètres et de traitement de signaux représentatifs de ces paramètres qui sont, en général, des organes fragiles à fort risque de pannes.

A cet effet, l'invention a donc pour objet un dispositif d'étirage d'un film en matière plastique comportant plusieurs rouleaux consécutifs sur chacun desquels le film porte par une surface d'enroulement suffisante pour interdire le glissement du film par rapport au rouleau concerné.

Selon la caractéristique principale de l'invention, ce dispositif comporte entre un rouleau amont et un rouleau aval entraînés à des vitesses périphériques différentes déterminant le taux d'allongement du film, une pluralité de rouleaux intermédiaires non motorisés, mécaniquement accouplés entre eux de sorte que dans le sens du défilement du film, la vitesse périphérique de chaque rouleau soit supérieure à celle du rouleau précédent, le rapport des vitesses périphériques de deux rouleaux intermédiaires consécutifs correspondant à un allongement intermédiaire déterminé du film, inférieur à l'allongement total.

Les moyens d'accouplement en rotation de ces rouleaux intermédiaires entre eux sont tels que le taux d'allongement du film dans la pluralité de rouleaux intermédiaires est compris entre le sixième et le tiers du taux d'allongement total.

On comprend que par le dispositif de l'invention on procède à un étirage du film en au moins deux étapes. Il y a en effet un allongement réalisé par les rouleaux intermédiaires dans un rapport déterminé et au moins un autre allongement dont la localisation dépendra des conditions rencontrées au cours du processus. Ainsi on pourra constater que cet autre allongement se produira en totalité entre le rouleau amont et le premier rouleau intermédiaire. Dans d'autres cas il sera réalisé totalement entre le dernier rouleau intermédiaire et le rouleau aval. Enfin, il pourra se produire pour partie en amont des rouleaux intermédiaires et pour partie en aval de ces derniers, et ce dans des proportions variables. Ces différentes localisations sont tout à fait indépendantes de la conduite de l'appareil, et elles changent d'elles-mêmes au cours d'un même processus d'étirage. Le premier résultat en est que les ruptures de film ont pratiquement disparu quelles que soient les conditions dans lesquelles le processus s'est déroulé.

Dans une variante simple de réalisation, le nombre de rouleaux intermédiaires est limité à deux. Il sera alors préférable que ces rouleaux soient accouplés de manière à tourner dans le même sens, le film n'étant alors pas contraint à passer entre eux ce qui simplifie grandement l'opération d'introduction du film dans le dispositif. Dans ce cas, les rouleaux amont et aval tourneront également dans le même sens mais de préférence inverse du sens de rotation des rouleaux intermédiaires, bien que cette inversion ne soit pas obligatoire. Elle présente simplement l'avantage d'une construction plus simple en évitant la mise en oeuvre de rouleau auxiliaire de renvoi du film pour satisfaire à la nécessité d'enroulement sans glissement de ce dernier sur les rouleaux d'étirage.

On peut, bien entendu , choisir les sens de rotation des rouleaux amont, aval et intermédiaires de manière que chaque rouleau tourne dans le sens contraire de celui ou ceux qui lui sont adjacents (le long du trajet du film). Dans ce cas le film coupera à chaque fois la ligne des centres de deux rouleaux consécutifs.

Enfin, il sera avantageux de prévoir que les rouleaux intermédiaires soient portés par un châssis mobile (coulissant ou articulé) par rapport au châssis du support des rouleaux amont et aval, afin de faciliter l'introduction du film. En effet, il est avantageux que les rouleaux soient au plus près les uns des autres pour limiter le plus possible le rétrécissement du film lors de son étirage. La mobilité relative des deux châssis permet de satisfaire cette exigence pendant l'opération d'étirage tout en facilitant la mise en place de l'extrémité du film dans le dispositif.

L'invention sera mieux comprise au cours de la description donnée ci-après à titre d'exemple indicatif et non limitatif qui permettra d'en dégager les avantages et les caractéristiques secondaires.

Il sera fait référence aux dessins annexés dans lesquels :
- la figure 1 est un schéma d'une vue de dessus d'un premier mode de réalisation de l'invention,
- la figure 2 est un même schéma d'une première variante de réalisation,
- la figure 3 est une vue schématique d'une tête de machine d'emballage équipée d'un dispositif selon la figure 1,
- la figure 4 est une vue partielle selon la flèche F de la figure 3.

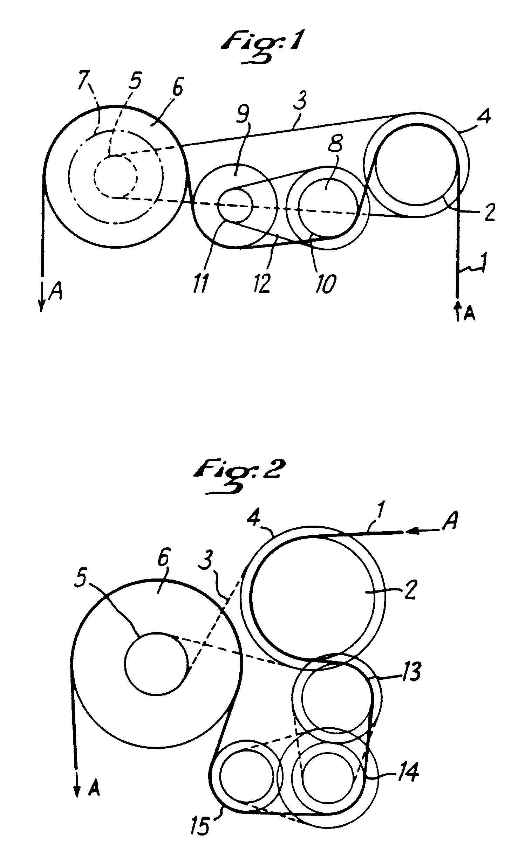

Sur la figure 1, un film 1 déplacé selon la fléche A s'enroule autour d'un rouleau 2 appelé rouleau amont puisque le premier rencontré par le film 1 dans son trajet, ce rouleau 2 étant accouplé, dans le cas de figure au moyen d'une courroie 3 et d'une poulie 4 à la poulie 5 calée sur l'arbre d'un second rouleau 6. Un moteur 7 est esquissé en trait mixte et assure l'entraînement de l'ensemble ainsi accouplé. Compte tenu des rapports choisis entre les diamètres des poulies 4 et 5 et des rouleaux 2 et 6, la vitesse périphérique du rouleau 6 peut être plusieurs fois supérieure à celle du rouleau 2.

Le film 1 quitte le rouleau 2 pour venir au contact successivement de rouleaux intermédiaires 8 et 9. Ces rouleaux ne sont pas motorisés, c'est-à-dire ne tournent autour de leur axe que par entraînement par le film. En revanche, ils sont accouplés mécaniquement l'un à l'autre au moyen de poulies 10 et 11 et d'une courroie 12 tendue entre elles. On a choisi des diamètres de poulies et des diamètres de rouleaux intermédiaires tels que la vitesse périphérique du rouleau 9 le plus en aval est supérieur à la vitesse périphérique 8. Le film quittant le rouleau 9, s'enroule sur le rouleau 6.

On rappellera que si le rapport entre les vitesses périphériques des rouleaux 6 et 2 est de 4,5 l'allongement du film sera de 350 %. Le rapport entre les vitesses périphériques des rouleaux intermédiaires 9 et 8 peut être défini pour obtenir entre eux le cinquième de l'allongement total c'est-à-dire 70 %. Dans ce cas, le raport sera de 1,7.

En entraînant l'ensemble du dispositif par le moteur 7 qui, au travers des rouleaux 2 et 6 entraîne le film et fournit l'énergie pour l'étirer, on constate plusieurs configurations de fonctionnement. La première est qu'entre les rouleaux 2 et 8 il ne se produit aucun allongement du film, celui-ci étant de 70 % entre les rouleaux 8 et 9 et de 280 % entre les rouleaux 9 et 6. Tout semble se passer comme si l'allongement entre rouleaux intermédiaires constitue une étape d'amorçage nécessaire à l'accomplissement de l'étirage principal, évitant peut-être la rupture du film.

La seconde configuration correspond au cas ou 280 % de l'étirage est réalisé entre les rouleaux 2 et 8, 70 % entre les rouleaux 8 et 9 et pas d'allongement entre les rouleaux 9 et 6. Dans ce cas, il semble que le film soit dans des conditions de température et d'épaisseur autorisant sans dommage un allongement de l'ordre de ceux habituellement pratiqués. Les 70 % restant peuvent alors être aisément absorbés par le film ce qui permet d'aller au-delà des limites habituelles dans l'étirage.

Enfin la troisième configuration est un moyen terme variable entre ces deux cas extrêmes, c'est-à-dire une répartition de l'étirage entre le rouleau 2 et le rouleau 8, bien sûr et à "taux fixe" entre le rouleau 8 et le rouleau 9, et enfin entre le rouleau 9 et le rouleau 5. On a constaté qu'il pouvait s'établir un équilibre à raison de 130 à 160 % de chaque côté des rouleaux intermédiaires, avec oscillations autour de ces valeurs médianes.

On a également observé qu'au cours d'un même processus d'étirage, le dispositif passait aisément de l'une à l'autre des configurations de fonctionnement, prenant ainsi automatiquement en compte les variations qui interviennent dans la nature du film ou dans les conditions ambiantes.

Le dispositif selon l'invention peut être construit selon de nombreuses variantes. La figure 2 en illustre une à titre indicatif, qui comprend trois rouleaux intermédiaires 13, 14, 15, divisant ainsi en deux étapes l'étirage réalisé à ce niveau. Si les rouleaux intermédiaires tournent dans le même sens, et s'ils sont en nombre impair, il faut entraîner les rouleaux 2 et 6 en sens contraires l'un de l'autre. Bien entendu, la liaison par courroie tant entre les rouleaux amont et aval qu'entre les rouleaux intermédiaires peut être assurée par tout autra moyen d'accouplement à rapport fixe ou variable. De même les sens de rotation seront choisis de manière à disposer sur chaque rouleau d'un arc d'enroulement du film propre à assurer son adhérence. On notera à ce propos que le passage du film à l'extérieur des rouleaux intermédiaires tournant dans le même sens, facilite l'introduction du film dans la machine car il n'est pas nécessaire de le conduire entre eux. Enfin on s'arrangera pour rendre la distance entre chaque rouleau la plus courte possible pour diminuer la longueur de la zone d'allongement, et ainsi réduire la rétraction transversale du film. Dans ce cas, il sera avantageux de monter les rouleaux intermédiaires sur un châssis mobile par rapport à un bâti qui supporte les rouleaux amont et aval.

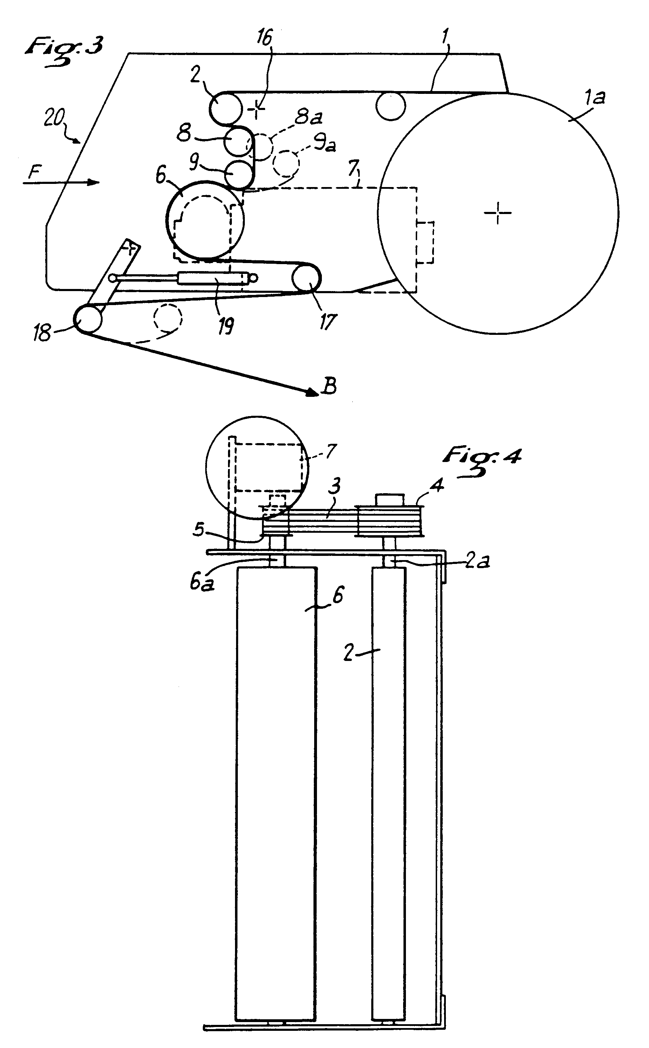

Sur les figures 3 et 4, le dispositif de la figure 1 est représenté monté sur une tête 20 permettant de délivrer du film étiré en direction B d'une charge à envelopper par banderolage. On retrouve le film 1 issu d'une bobine 1a et les rouleaux déjà décrits avec les mêmes références. On voit que les rouleaux 8 et 9 peuvent prendre une position 8a, 9a par pivotement de leur châssis porteur (non représenté) autour d'un axe 16. A la sortie du rouleau 6 le film 1 passe sur un rouleau de renvoi 17 et sur un rouleau tendeur 18 coopérant avec un ressort 19 pour absorber les variations de quantité de film demandées par la charge lorsqu'elle tourne et si elle est polyédrique. On voit également que le groupe moto réducteur 7 attaque l'arbre 6a du rouleau 6 qui porte la poulie 5, la courroie 3 venant entraîner le rouleau 2 par la poulie 4 calée sur son arbre 2a.

Dans une variante de l'invention, on peut procéder à l'entraînement séparé des rouleaux 2 et 6 au moyen de moteurs indépendants asservis en vitesse l'un à l'autre.

Le dispositif selon l'invention peut également s'appliquer pour constituer des bobines de film préétiré sur un banc de préparation de ces bobines qui seraient ensuite simplement à dévider par une tête de banderolage.

## Revendications

1. Dispositif d'étirage d'un film (1) en matière plastique comportant entre un roleau amont (2) et un roleau aval (6) entraînés à des vitesses périphériques différentes déterminant le taux d'allongement du film (1), une plurailité de rouleaux intermédiaires (8,9,13,14,15) non motorisés sur chacun desquels le film (1) porte par une surface d'enroulement suffisante pour interdire le glissement du film par rapport au rouleau concerné, mécaniquement accouplés entre eux de manière que, dans le sens du défilement du film (1), la vitesse périphérique de chaque rouleau soit supérieure à celle du rouleau précédent, le rapport des vitesses périphériques de deux rouleaux intermédiaires consécutifs correspondant à un allongement intermédiaire déterminé du film, inférieur à l'allongement total.

2. Dispositif selon la revendication 1, caractérisé en ce que le taux d'allongement du film (1) dans la pluralité de rouleaux intermédiaires est compris entre le sixième et le tiers du taux d'allongement total.

3. Dispositif selon la revndication 1 ou la revendication 2, caractérisé en ce que les rouleaux intermédiaires forment une paire de rouleaux (8,9).

4. Dispositif selon l'une quelconque des revendications précédentes, caractérisé en ce que tous les rouleaux intermédiaires (8,9,13,14,15) tournent dans le même sens.

5. Dispositif selon l'une quelconque des revendications précédentes, caractérisé en ce que les rouleaux amont (2) et aval (6) sont mécaniquement accouplés pour tourner dans le même sens, inverse du sens de rotation des rouleaux intermédiaires (8,9), le moteur (7) d'entraînement étant accouplé au rouleau aval (6).

6. Dispositif selon l'une quelconque des revendications précédentes, caractérisé en ce que les rouleaux intermédiaires sont portés par un châssis pivotant par rapport aux châssis des rouleaux amont et aval.

## Claims

1. Apparatus for stretching a film (1) of plastic material, comprising between an upstream roll (2) and a downstream roll (6) which are driven at different peripheral speeds to determine an elongation ratio for the film (1), a plurality of intermediate non-motorized rolls (8,9,13,14,15) with the film bearing over a sufficient area of each of them to prevent the film from sliding on any of them, characterized in that said intermediate rolls are mechanically coupled to one another so that, in the direction of film travel, the peripheral speed of each roll is higher than the speed of the preceding roll, with the ratio between the peripheral speeds of two consecutive intermediate rolls corresponding to a determined intermediate elongation of the film which is less than the total elongation.

2. Apparatus according to claim 1 characterized in that the elongation ratio of the film (1) as it passes through the plurality of intermediate rolls lies between one sixth and one third of the total elongation.

3. Apparatus according to claims 1 or 2, characterized in that the intermediate rolls constitute a pair of rolls (8,9).

4. Apparatus according to anyone of claims 1 to 3, characterized in that the intermediate rolls (8,9,13,14,15) all rotate in the same direction.

5. Apparatus according to anyone of the preceding claims characterized in that the upstream (2) and downstream (6) rolls are mechanically coupled to each other, with a drive motor (7) being coupled to the downstream roll (6) in order to rotate said upstream and downstream rolls in the same direction which is opposite to the direction in which the intermediate rolls (8,9) rotate.

6. Apparatus according to anyone of the preceding claims, characterized in that the intermediate rolls are carried by a frame which is pivotally mounted relative to a frame carrying the upstream and downstream rolls.

## Patentansprüche

1. Vorrichtung zum Strecken einer Kunststoffolie (1), umfassend zwischen einer stromaufwärts gelegenen Walze (2) und einer stromabwärts gelegenen Walze (6), die mit unterschiedlichen Umfangsgeschwindigkeiten angetrieben werden, die den Längungsgrad der Folie (1) bestimmen, eine Mehrzahl von nicht angetriebenen Zwischenwalzen (8, 9, 13, 14, 15), an denen die Folie (1) jeweils mit einer ausreichend großen Umschlingungsfläche anliegt, um ein Gleiten der Folie relativ zu der jeweiligen Walze zu verhindern, dadurch **gekennzeichnet,** daß die Zwischenwalzen unter einander mechanisch derart gekoppelt sind, daß die Umfangsgeschwindigkeit jeder Walze, in Durchlaufrichtung der Folie (1) betrachtet, höher als diejenige der vorhergehenden Walze ist, wobei das Verhältnis der Umfangegeschwindigkeiten zweier aufeinanderfolgender Zwischenwalzen einer bestimmten Zwischenlängung der Folie (1) entspricht, die geringer als die gesamte Längung ist.

2. Vorrichtung nach Anspruch 1, dadurch **gekennzeichnet,** daß der Längungsgrad der Folie (1) in der Gesamtheit der Zwischenwalzen zwischen einem Sechstel und einem Drittel des Gesamtlängungsgrades liegt.

3. Vorrichtung nach Anspruch 1 oder 2, dadurch **gekennzeichnet,** daß die Zwischenwalzen ein Walzenpaar (8, 9) bilden.

4. Vorrichtung nach einem der vorhergehenden Ansprüche, dadurch **gekennzeichnet,** daß alle Zwischanwalzen (8, 9, 13, 14, 15) sich in derselben Richtung drehen.

5. Vorrichtung nach einem der vorhergehenden Ansprüche, dadurch **gekennzeichnet,** daß die stromaufwärts gelegene Walze (2) und die stromabwärts gelegene Walze (6) mechanisch gekoppelt sind, so daß sie in derselben Richtung umlaufen, die zu der Drehrichtung der Zwischenwalzen (8, 9) entgegengesetzt ist, wobei der Antriebsmotor (7) mit der stromabwärts gelegenen Walze (6) verbunden ist.

6. Vorrichtung nach einem der vorhergehenden Ansprüche, dadurch **gekennzeichnet,** daß die Zwischenwalzen an einem Chassis gelagert Sind, das gegenüber den Chassis der stromaufwärts und stromabwärts gelegenen Walzen schwenkbar ist.
